# EUROPÄISCHE PATENTSCHRIFT

(11) **EP 1 293 799 B1**
(45) Veröffentlichungstag und Bekanntmachung des Hinweises auf die Patenterteilung: **26.10.2005**
(21) Anmeldenummer: 02020218.0
(22) Anmeldetag: 10.09.2002
(51) Int. Cl.: F41G 5/08, G01S 13/72

(54) **Verfahren zur Erfassung einer Luftlage in einem Kampffahrzeug sowie Vorrichtung zur Durchführung des Verfahrens**
Method for determining an air situation in a combat vehicle and device for carrying out the method therefor
Procédé pour déterminer la situation aérienne dans un véhicule de combat et dispositif correspondant pour l'exécution du procédé

(30) Priorität: 15.09.2001 DE 10145641
(43) Veröffentlichungstag der Anmeldung: 19.03.2003
(73) Patentinhaber: Krauss-Maffei Wegmann GmbH & Co. KG, 34127 Kassel (DE)
(72) Erfinder: Tietze, Werner, Dipl.-Ing., 82152 Planegg (DE); Kempin, Manfred, 85221 Dachau (DE)
(74) Vertreter: Feder, Wolf-Dietrich

(56) Entgegenhaltungen:
- EP-A- 0 207 521
- EP-A- 0 276 454
- CH-A- 690 199
- DE-A- 2 828 511
- DE-C- 3 533 213
- US-A- 5 920 027

## Beschreibung

Die Erfindung betrifft ein Verfahren zur Erfassung einer Luftlage in einem Kampffahrzeug, das mit einer Suchradareinrichtung ausgerüstet ist, die einen Sender/Empfänger mit rotierender Sende/Empfangs-antenne, eine Signalauswerteeinrichtung sowie ein Sichtgerät umfaßt, wobei pro Umdrehung der Sende/Empfangsantenne Zielechosignale erzeugt werden, die zur optischen Darstellung der Ziele mittels einer Braunschen Röhre dienen.

Derartige Suchradareinrichtungen sind allgemein bekannt (siehe z.B. DE 37 03 952) und können beispielsweise in einem, zur Luftabwehr ausgerüsteten Kampffahrzeug installiert sein. Der Erfindung liegt die Aufgabe zugrunde, ein Verfahren und eine Vorrichtung zu schaffen, die die datentechnische Erfassung, Erzeugung und Bereitstellung einer Luftlage in einem Kampffahrzeug und die Übertragung der Daten von einem Kampffahrzeug über eine Funkstrecke zu einem außerhalb dieses Kampffahrzeugs angeordneten Rechner zur Darstellung einer "Fremdluftlage" ermöglichen. Dabei war zu berücksichtigen, daß die von der Suchradareinrichtung abgegebenen Zielechosignale zunächst lediglich für einen speziellen Zweck gedacht und geeignet sind, nämlich für die optische Darstellung auf einer Braunschen Röhre und nicht zur Berechnung von Zahlenwerten der Zielkoordinaten. Es bestand also zunächst die Aufgabe, die für einen anderen Zweck gedachten Signale so zu bearbeiten, daß sie zur Berechnung der Zahlenwerte der Zielkoordinaten geeignet werden. Dann mußte diese Berechnung durchgeführt werden und die ermittelten Zielkoordinaten sollten in einer Form vorliegen, daß sie weiter übertragen werden können.

Unter einer "Fremdluftlage" wird dabei eine im Waffensystem durch fremdes Radar über Datenfunkverbindungen aus einem anderen Radarsystem übertragene Luftlage verstanden und unter "Luftlage" die Darstellung von Flugzeugen oder anderen fliegenden Objekten in der Umgebung mit ihren Koordinaten und Flugbahnen.

Die Lösung dieser Aufgabe erfolgt mit den im kennzeichnenden Teil des Patentanspruchs 1 angegebenen Verfahrensschritten.

Weiterbildungen des erfindungsgemäßen Verfahrens sind in den abhängigen Ansprüchen beschrieben.

Vorrichtungen zur Durchführung des Verfahrens sind Gegenstand der Ansprüche 15 bis 17.

Der Grundgedanke der Erfindung besteht darin, die Impulse der Zielechosignale abzugreifen, in Rechteckimpulse zu verarbeiten und die Abstände der Zielimpulse vom Taktimpuls sowie die Länge der Zielimpulse zu vermessen und zu digitalisieren. Wie weiter unten anhand von Ausführungsbeispielen näher erläutert, stößt dieses Verfahren zunächst auf Schwierigkeiten bei der Auswertung und Übertragung der Daten, da eine außerordentlich hohe Datenmenge pro Zeiteinheit ausgewertet werden müßte.

Es läßt sich ausrechnen, daß bei einer Annahme von 50 Zielen und einer maximalen Breite der Ziele von 22° bei 7000 Zielechosignalen pro Sekunde und Umdrehung der Sende/Empfangsantenne des Suchradars maximal 21388 Zieldaten pro Sekunde erzeugt werden. Da die Datenrate beispielsweise auf einem CAN-Bus typischerweise 1 Mbit/s beträgt und ein Telegramm typischerweise 130bit lang ist, würde die Übertragung dieser Daten auf einen PC zur Auswertung 2,787s dauern.

Hieraus folgt, daß die Daten in geeigneter Weise zusammengefaßt werden müssen, so daß maximal 500 bis 1000 Zieldaten pro Sekunde entstehen.

Diese Reduzierung der Datenmenge wird im Rahmen des erfindungsgemäßen Verfahrens erreicht, indem die Meßwerte auf ein vorgegebene Entfernungsbereiche enthaltendes Raster abgebildet werden, die beispielsweise jeweils durch ein Bit in einem Datentelegramm dargestellt werden. Die Meßwerte jedes Entfemungsbereiches des betrachteten Zielechosignals werden beispielsweise mit den entsprechenden Meßwerten des jeweils vorhergehenden Zielechosignals verglichen und es werden nur dann Daten weiter übertragen, wenn sich die Meßwerte geändert haben. Hierdurch ist eine erhebliche Reduktion der Datenmenge möglich. Zusätzliche Telegramme zur Synchronisation können eingefügt werden, wenn sich die Meßwerte über einen vorgegebenen längeren Zeitraum nicht geändert haben. Zur Zuordnung der Datentelegramme zu den einzelnen Zielechosignalen wird in den Telegrammen noch die Anzahl der identischen Zielechosignale übertragen. Damit kann die exakte Nummer des dem entsprechenden Telegramm zugeordneten Zielechosignals berechnet werden.

Im folgenden werden anhand der beigefügten Zeichnungen das erfindungsgemäße Verfahren zur Erfassung und Darstellung einer Luftlage in einem Kampffahrzeug sowie seine vorteilhaften Ausbildungen und eine Vorrichtung zur Durchführung des Verfahrens näher erläutert.

In den Zeichnungen zeigen:
Fig. 1 in aufgebrochener, perspektivischer Darstellung den Turm eines Kampffahrzeuges mit einer Suchradareinrichtung;
Fig. 1A ein innerhalb des Kampffahrzeugs angeordnetes Bedienungsgerät zur Darstellung einer Fremdluftlage;
Fig. 1B in einem Blockschaltbild eine Vorrichtung zur Erfassung und Darstellung einer Luftlage und zur Übertragung der Daten auf einen Rechner;
Fig. 2 in vereinfachter Darstellung den zeitlichen Verlauf eines Zielechosignals;
Fig. 3 in einem Schaubild die Winkelverteilung der Zielechosignale;
Fig. 4 in einem Blockschaltbild die Datenerfassungseinrichtung der Vorrichtung nach Fig. 1;
Fig. 5 in einem detaillierteren Zeitdiagramm die Impulse des Zielechosignals;
Fig. 6 in schematischer Darstellung die erzeugten und übertragenen Datentelegramme der digitalisierten Daten;
Fig. 7 in einem Zeitdiagramm die auf das Raster abgebildeten Meßwerte der Zielechosignale;
Fig. 8 in einem schematischen Schaubild die Lage und Form eines gestörten Zielimpulses des Zielechosignals;
Fig. 9 in einer Darstellung analog Fig. 7 die auf das Raster abgebildeten Meßwerte aufeinanderfolgender Zielechosignale eines gestörten Zielimpulses;
Fig. 10 die Darstellung des Zieles in ebenen Polarkoordinaten;
Fig. 11, 11A und 11B eine weitere Möglichkeit der Darstellung des Ziels in ebenen Polarkoordinaten;
Fig. 12 und 13 in stark schematisierter Darstellung Zielechosignale mit Zieldaten und mit IFF-Daten für das gleiche Ziel;
Fig. 14 in einer Darstellung analog Fig. 1 die Vorrichtung nach Fig. 1 mit einem zweiten, über eine Datenfunkverbindung angeschlossenen PPI-Sichtgerät;
Fig. 15 und 16 in einem Winkel/Entfernungs-Diagramm ein Beispiel für eine tatsächliche und eine nach dem beschriebenen Verfahren berechnete Flugbahn.

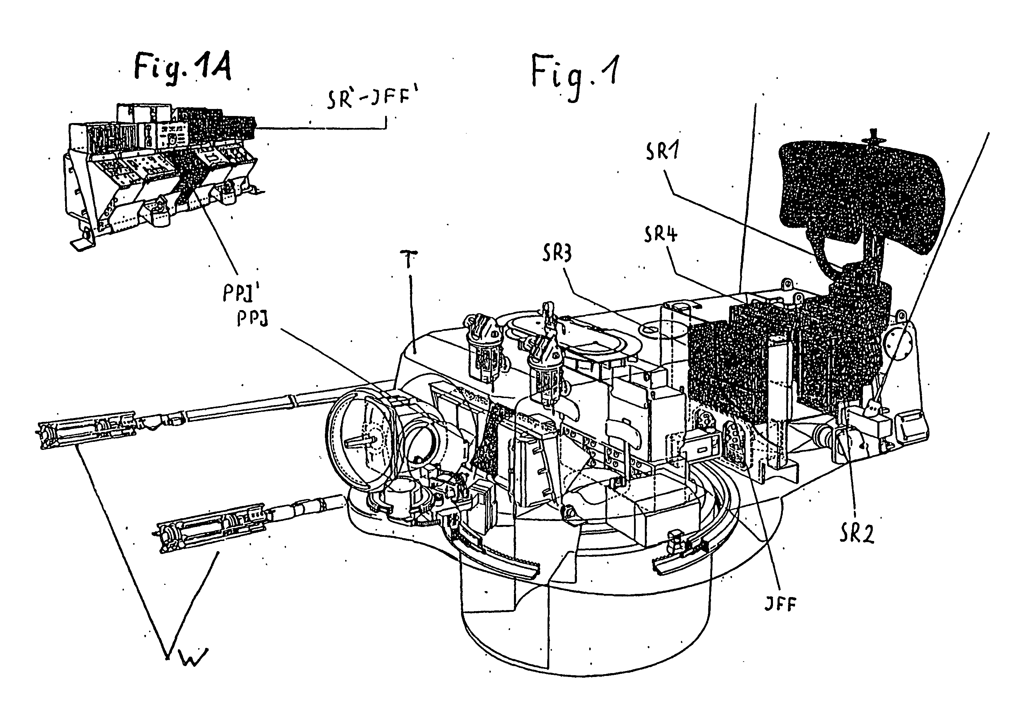

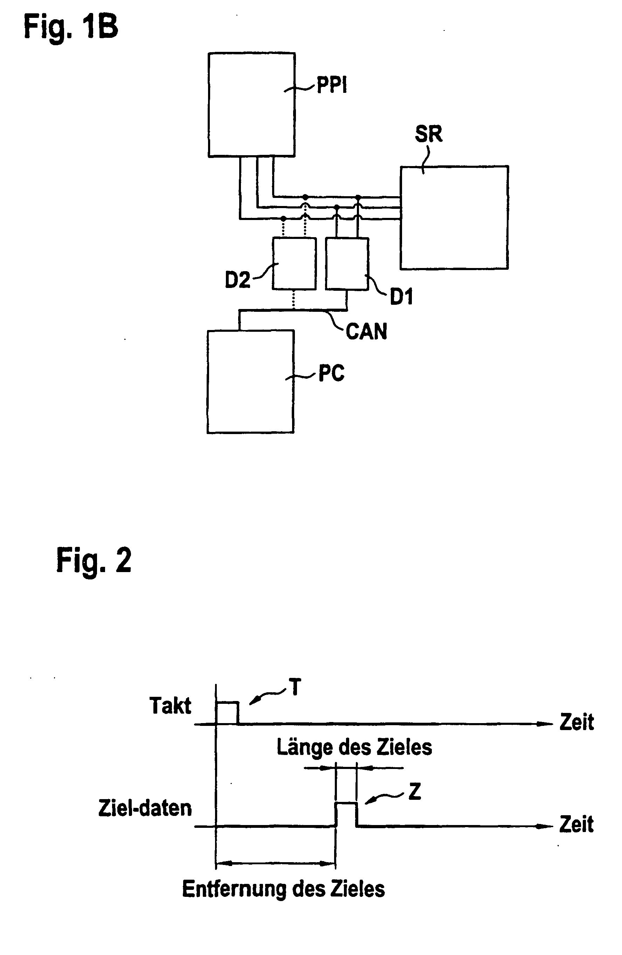

Fig. 1 zeigt den in Azimut drehbaren Turm T eines im übrigen nicht dargestellten Flugabwehr-Kanonen-Panzers mit einer Waffenanlage W und den einzelnen Komponenten einer Suchradareinrichtung, nämlich einer rotierenden SR/IFF-Antenne mit Antrieb und Hubhydraulik SR1, einem Suchradar-Sender SR2, einem Suchradar-Empfänger SR3 und einer Stromversorgung SR4. Weiterhin besitzt die Einrichtung ein IFF-Abfragegerät zur Identifizierung Freund/Feind und im vorderen Teil des Turmes T ein PPI-Sichtgerät zur Darstellung der Luftlage auf einer Braunschen Röhre.

Fig. 1A zeigt ein Bedienungsgerät und die Elektronik SR'-IFF' mit einem Sichtgerät PPI', welche innerhalb des in Fig. 1 dargestellten Kampffahrzeugs angeordnet sind, um dort eine von der Suchradareinrichtung des Kampffahrzeugs nach Fig. 1 her erfaßte Luftlage anzuzeigen.

Fig. 1B zeigt in einem schematisierten Blockschaltbild die in Fig. 1 dargestellten Komponenten der Suchradareinrichtung, wobei in vereinfachter Weise der Empfangsteil der Suchradareinrichtung mit SR bezeichnet ist. Von diesem Empfangsteil SR werden Taktimpulse, Zielimpulse (Zieldaten), sowie Impulse für die Identifizierung Freund/Feind (IFF-Daten) dem PPI-Sichtgerät PPI zugeführt. Mittels einer ersten Datenerfassungseinrichtung D1 werden die Taktimpulse und die Zielimpulse der Zielechosignale abgegriffen und in weiter unten erläuterter Weise in Rechteckimpulse umgewandelt und weiterverarbeitet. Die erhaltenen und in ebenfalls weiter unten erläuterter Weise in ihrer Menge reduzierten Daten werden auf einen CAN-Bus CAN gegeben und von dort einem Rechner zugeführt zur Berechnung und Anzeige der Ziele.

Eine zweite Datenerfassungseinrichtung D2, die in Fig. 1B gestrichelt eingezeichnet ist, arbeitet in analoger Weise wie die Datenerfassungseinrichtung D1 und dient zum Abgreifen und zur Verarbeitung der Signale der Identifizierung Freund/Feind.

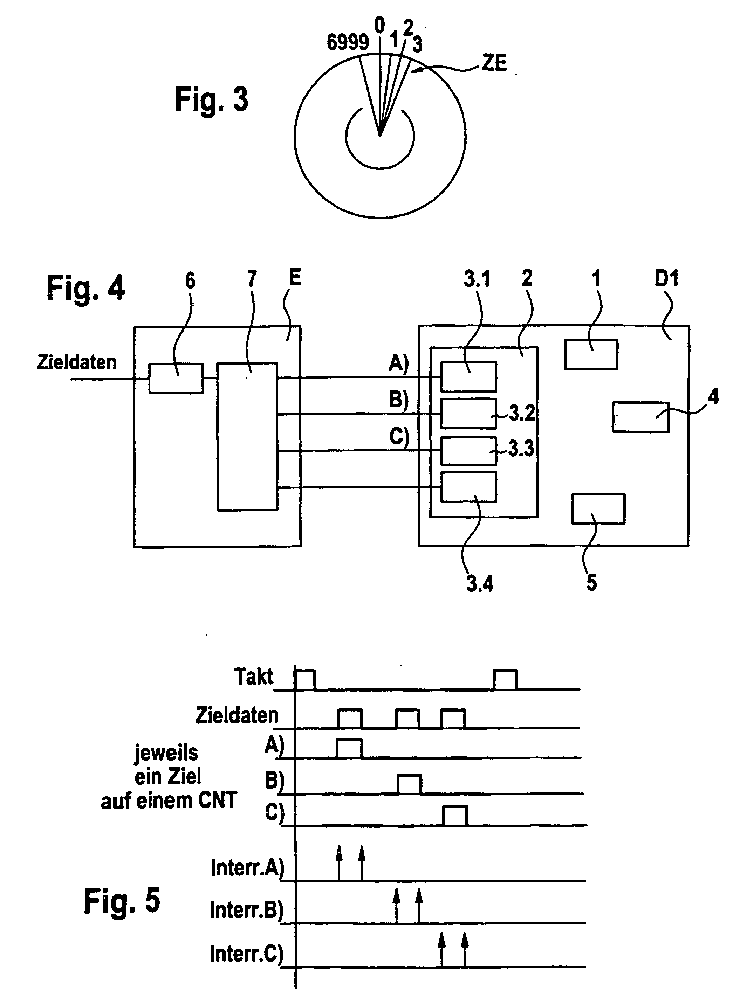

Fig. 2 zeigt in beispielhafter und vereinfachter Weise den grundsätzlichen Aufbau der zur Erfassung der Luftlage dienenden Signale, und zwar einen Synchronisier- oder Taktimpuls T und einen Zielimpuls Z. Der zeitliche Abstand des Zielimpulses Z vom Taktimpuls T charakterisiert die Entfernung des Zieles, während die zeitliche Länge des Zielimpulses Z die Länge des Zieles charakterisiert. Fig. 2 zeigt ein Zielechosignal in vereinfachter Form. Dieses Zielechosignal entspricht einem Radarstrahl. Die Sende/Empfangsantenne SR1 der Suchradareinrichtung dreht sich mit 1 Hz und sendet dabei ca. 7000 Radarstrahlen, d.h. 7000 Zielechosignale pro Umdrehung aus. Wenn der Turm T steht, entsprechen diese 7000 Zielechosignale einem Blickfeld von 360°. Dies ist in Fig. 3 in einem Schaubild dargestellt. Die Zielechosignale ZE sind dabei durchnumeriert von 0 bis 6999.

Fig. 4 zeigt in einem etwas detaillierteren Blockschaltbild die Datenerfassungseinrichtung D1, die als Singlechip-CPU ausgebildet ist mit einer CPU 1, einer Zeit-Prozessoreinheit (TPU) 2, wobei letztere Zählermodule (CNT) 3.1, 3.2, 3.3 und 3.4 enthält. Weiterhin befindet sich auf ihr der CAN-Bus 4 sowie Speichereinheiten 5.

Der Datenerfassungseinrichtung D1 vorgeschaltet ist eine Einheit E mit einem Filter 6 für die eingehenden Zielimpulse. Das Filter 6 dient zur Bereinigung gestörter Eingangssignale, damit nicht unnötig viele Impulse vermessen werden müssen. Dies ist deswegen notwendig, weil das Zielechosignal nicht immer in Reinform vorliegt. Es kann gestört sein, indem beispielsweise mehrere Ziele hintereinander auf einem Strahl liegen und es können Ziele mit unterschiedlicher Länge vorkommen. Die Wirkungsweise des Filters 6 ist folgende. Mit jedem "High"-Wert des Eingangssignals wird ein retriggerbarer Zähler gesetzt. Der Zähler zählt vom gesetzten Wert abwärts bis Null und ist so eingestellt, daß dieser Vorgang eine fest vorgegebene Zeitdauer von beispielsweise 5µs besitzt. Damit wird jeder Eingangsimpuls um 5µs verlängert. Diese 5µs werden später nach der Vermessung wieder abgezogen, um die exakte Länge des Ziels zu erhalten.

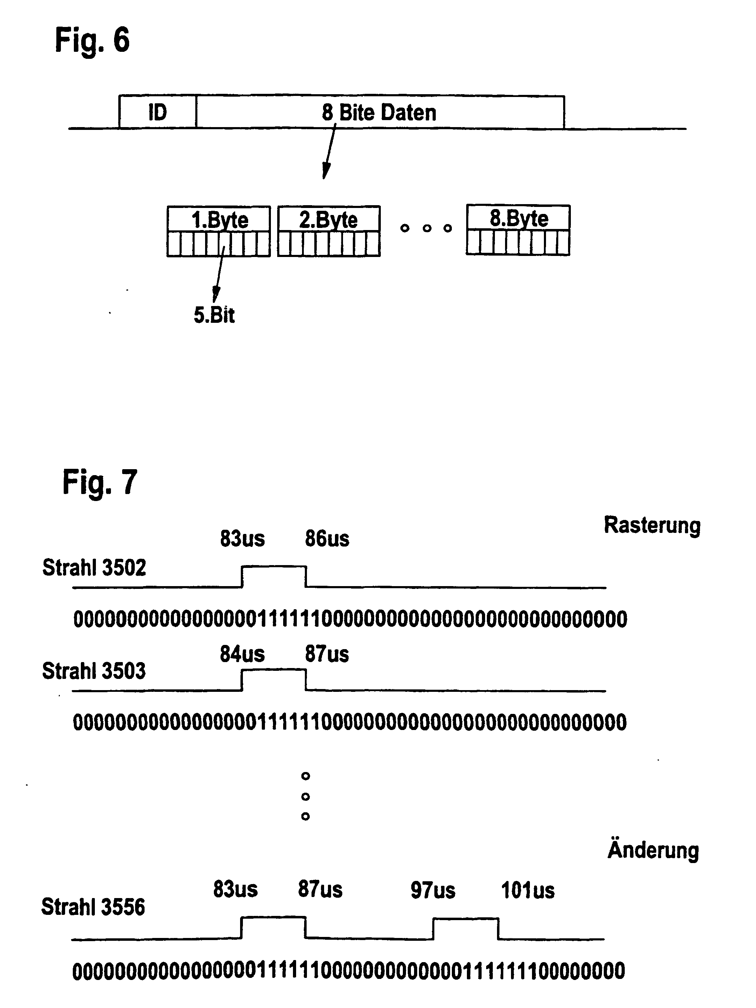

Vom Verteiler 7 werden die einzelnen Zielimpulse jedes Zielechosignals auf die zu den Zählermodulen 3.1 bis 3.4 führenden Kanäle verteilt und zwar derart, daß das erste Zählermodul 3.1 nur den ersten Zielimpuls, das zweite Zählermodul 3.2 nur den zweiten Zielimpuls usw. vermessen muß. Im dargestellten Ausführungsbeispiel ist die Verteilung auf vier Zählermodule 3.1 bis 3.4 dargestellt. In der Praxis kann selbstverständlich eine höhere Anzahl von Zählermodulen vorgesehen sein. Wie Fig. 5 zeigt, sind sowohl die Taktimpulse T als auch die Zielimpulse Z1, Z2, Z3, die vom Filter 6 abgegeben werden, Rechteckimpulse, welche die im unteren Teil von Fig. 5 als Pfeile dargestellten Interrupts auslösen, die von der TPU 2 richtig verarbeitet werden können. Die ermittelten Daten sollen von der Datenerfassungseinrichtung D1 zum PC über einen CAN-Bus übertragen werden, da dieser Bus ein schnelles, störsicheres und bewährtes Übertragungsmedium darstellt. Trotz der im obigen Sinne verbesserten Datenerfassung wäre die Weiterübertragung zur Verarbeitung der so ermittelten Datenmengen, wie bereits eingangs erwähnt, mit erheblichen Schwierigkeiten verbunden, weil eine zu große Datenmenge anfällt. Es ist daher notwendig, eine Reduzierung der Datenmenge durchzuführen. Zur Reduktion der Datenmenge werden die Meßwerte auf Entfernungsbereiche abgebildet, die dann jeweils durch ein Bit im Datentelegramm dargestellt werden. Dies ist in Fig. 6 schematisch dargestellt. In dem in Fig. 6 dargestellten aus 8 Byte bestehenden Datentelegramm kann beispielsweise das 5. Bit im 1. Byte dem Entfernungsbereich von 500 bis 599m entsprechen. Die mit dieser Anordnung erzielbare Datenreduktion, die auf einer Abbildung der digitalisierten Meßwerte auf ein, den vorgegebenen Entfernungsbereichen entsprechendes Raster beruht, ist in Fig. 7 beispielhaft dargestellt. In Fig. 7 stellen die aufeinanderfolgenden Zielechosignale, die als "Strahl 3502" usw. bezeichnet sind, Meßwerte des gleichen Ziels dar. Ab Strahl 3556 kommt ein weiteres Signal eines zweiten Ziels hinzu. Durch Störungen und Meßungenauigkeiten bei der Erfassung der Zieldaten eines Strahls sind die Meßwerte aber nicht identisch. Bei einer normalen Datenreduktion könnte nicht unterschieden werden, daß die Meßwerte das gleiche Ziel betreffen. Es müßten deswegen alle Meßwerte übertragen werden, was letztendlich zu keiner echten Reduzierung führen würde. Deshalb werden die Meßwerte zuerst auf ein Raster abgebildet. Es werden nicht die Meßwerte, sondern die gerasterten Meßwerte übertragen. Die Strahlen 3502 und 3503 fallen jetzt beispielsweise trotz unterschiedlicher Meßwerte, nämlich 83µs und 86µs gegenüber 84µs und 87µs noch in das gleiche Raster. Damit sind die zu übertragenden Werte identisch und es muß nur ein Wert übertragen werden. Dies bedeutet, daß die gerasterten Meßwerte, die den jeweiligen Entfernungsbereichen zugeordnet sind, bei jedem Zielechosignal mit den entsprechenden Meßwerten des jeweils vorhergehenden Zielechosignals verglichen werden und es werden nur dann Daten weiter übertragen, wenn sich die gerasterten Meßwerte geändert haben.

Bei dem in Fig. 7 dargestellten Beispiel führt erst das mit "Strahl 3556" bezeichnete Zielechosignal zu einer neuen Datenübertragung, da erst hier zu den Zeitpunkten 97µs und 101µs neue Rasterpunkte gesetzt sind.

Bei der Wahl des Rasters muß darauf geachtet werden, daß die Auflösung und Genauigkeit der Messungen nicht unnötig eingeschränkt wird.

Wenn sich die Meßwerte über einen längeren Zeitraum nicht geändert haben, können in die Übertragung zusätzliche Datentelegramme zur Synchronisation eingefügt werden. Zur Zuordnung der Datentelegramme zu den einzelnen Zielechosignalen wird in den Telegrammen noch die Anzahl der identischen Zielechosignale übertragen. Damit kann die exakte "Strahlnummer" für jedes Datentelegramm berechnet werden.

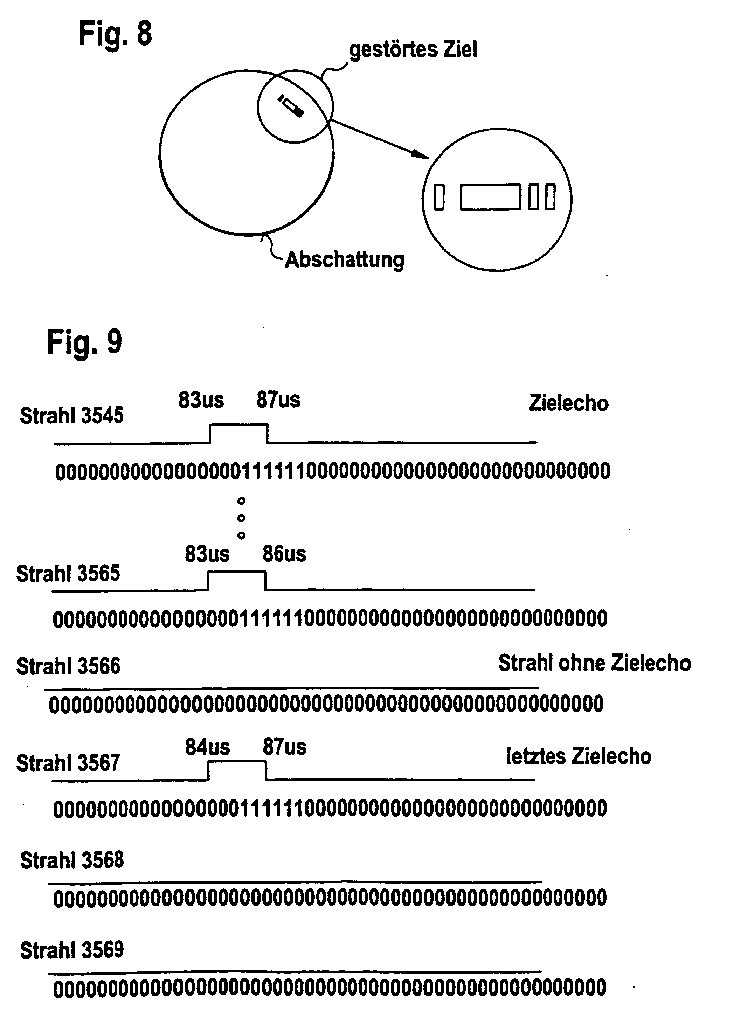

Zusätzlich zu den erwähnten Störungen der Zielechosignale in Bezug auf den Entfernungsbereich können die aufeinanderfolgenden Zielechosignale auch in Bezug auf den Winkelbereich gestört sein. So können insbesondere am Anfang und am Ende eines Ziels auch ganze Zielechosignale verschwinden. Dies führt zu Zieldarstellungen, wie sie beispielsweise in Fig. 8 dargestellt sind. Fig. 8 zeigt in einem Schaubild analog Fig. 3 den vom Suchradar erfaßten Gesamtwinkelbereich, wobei aus einem bestimmten Winkelbereich, der mit "gestörtes Ziel" bezeichnet ist, gestörte Zielechosignale kommen, die zu einer Darstellung des Zieles führen, wie es dem in Fig. 8 herausgezeichneten, leicht vergrößerten Bereich entspricht. Es sind am Anfang und am Ende des Zieles Löcher zu erkennen. In dem Schaubild von Fig. 8 ist mit "Abschattung" der Winkelbereich von 180° bezeichnet, der in Abhängigkeit von der jeweiligen Stellung des Turmes des Kampffahrzeuges von der Richtung der Waffenanlage abgewandt ist.

Bei der Auswertung der Zielechosignale müssen die in Fig. 8 dargestellten Störungen herausgefiltert werden, da sonst mehr Ziele als tatsächlich vorhanden sind, erkannt werden würden. Hierzu gilt ein Filterverfahren, das im folgenden anhand von Fig. 9 erläutert wird.

Zur Filterung werden jeweils beim Vergleich der Meßwerte eines Zielechosignals mit den Meßwerten des jeweils vorhergehenden Zielechosignals die gerasterten Meßwerte einer vorgegebenen Anzahl aufeinanderfolgender vorhergehender Zielechosignale, beispielsweise die gerasterten Meßwerte der letzten drei vorhergehenden Zielechosignale, durch logisch "ODER" miteinander verknüpft und es wird nur das Ergebnis der ODER-Verknüpfung übertragen.

Bezogen auf Fig. 9 bedeutet dies beispielsweise, daß, bevor die Daten von "Strahl 3566" übertragen werden, diese Daten mit den Daten der Strahlen 3564 und 3565 durch "ODER" verknüpft werden und damit der Ausfall des Zielechosignals beim Strahl 3566 unterdrückt wird. Dies hat zur Folge, daß, aber auch erst ab Strahl 3570 das Ende des Ziels übertragen wird und damit wird im dargestellten Ausführungsbeispiel jedes Ziel um drei Strahlen breiter als es tatsächlich ist. Dieser konstante Fehler wird kompensiert, indem er nach der Übertragung vor der Auswertung wieder abgezogen wird.

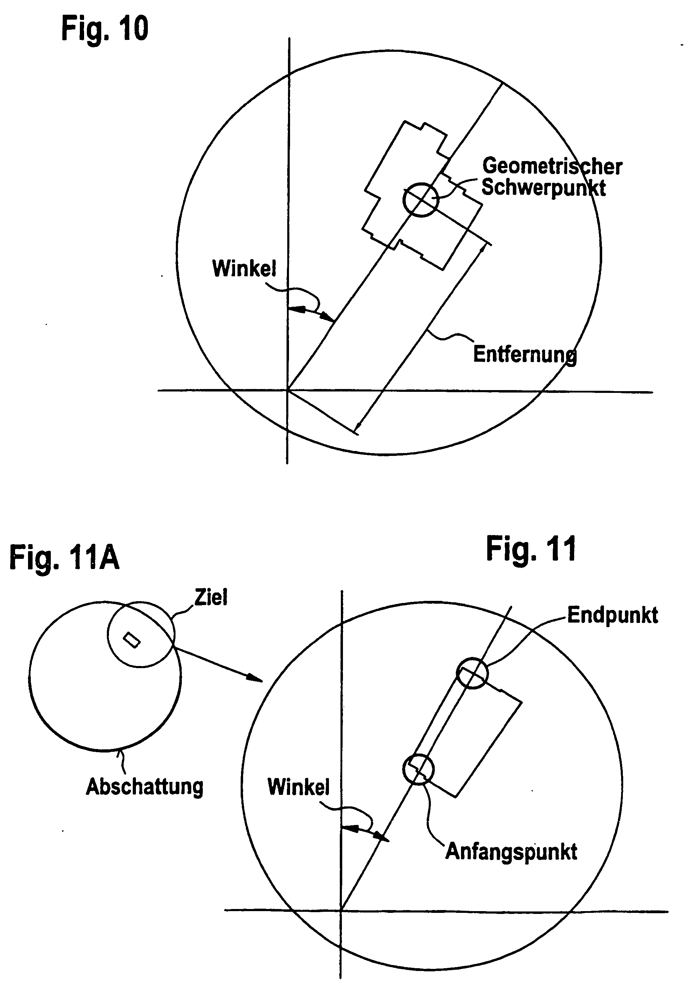

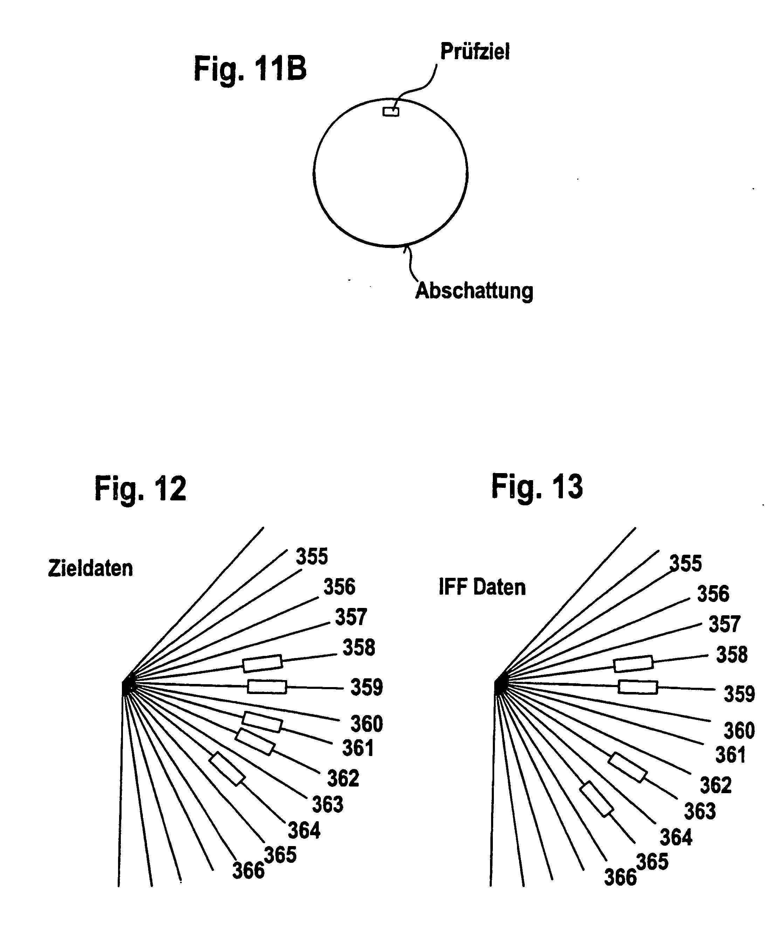

Im folgenden wird anhand der Fig. 10 und 11 erläutert, in welcher Weise die erfaßten und übertragenen Zieldaten berechnet und auf einem Rechner, z.B. einem PC, dargestellt werden können.

Aus den übertragenen Daten, nämlich den Strahlennummern der Zielechosignale und den den einzelnen Entfernungsbereichen zugeordneten Meßwerten für die Entfernungsbereiche werden zusammenhängende Entfernungsbereiche bestimmt und deren geometrischer Schwerpunkt berechnet. Fig. 10 zeigt als Beispiel das Ergebnis einer derartigen Berechnung. Die Lage des Schwerpunkts wird als Zielkoordinate mit Zielwinkel und Zielentfernung angezeigt und kann protokolliert werden. Diese Zielkoordinate kann dann auch über einfache serielle Verbindungen mit geringer Datenrate an externe Systeme übertragen werden. Um bei der Darstellung auf dem Bildschirm des Rechners klare Bezugspunkte zu haben, wird zuerst ein Prüfziel (Fig. 11B) detektiert. Das Prüfziel befindet sich immer exakt im Norden und wird auf dem Zielechosignal als einziges Ziel im äußersten Entfernungsbereich dargestellt. Das im Schaubild nach Fig. 11A dargestellte Ziel kann dann gemäß Fig. 11 durch einen Block auf dem Bildschirm angezeigt werden. Der Winkelbezug der einzelnen Strahlen erfolgt anhand des Prüfziels. Der Winkel des in Fig. 11 dargestellten Blockes ergibt sich durch die Strahlennummer und den Winkelbezug und die Lage von Anfangspunkt und Endpunkt des Blockes wird aufgrund der übertragenen Entfernungskoordinaten berechnet.

Das bisher beschriebene Verfahren zur Erfassung und Verarbeitung der Zieldaten kann auch zur Erfassung der Signale der Freund/Feind-Kennzeichnung (IFF) eingesetzt werden. Die Erfassung und Auswertung der IFF-Daten erfolgt mittels einer in Fig. 1B mit D2 bezeichneten und gestrichelt eingezeichneten Datenerfassungseinrichtung, die ebenfalls als Singlechip-CPU ausgebildet sein kann. Somit werden die Zieldaten und die IFF-Daten unabhängig voneinander nach dem gleichen Verfahren ermittelt. Die Daten werden komprimiert und gleichzeitig über den CAN-Bus an den Auswerte-Rechner übertragen.

Bedingt durch die unterschiedliche Sensorik und durch unterschiedliche Störungen und Fehler bei der Erfassung der Signale werden im allgemeinen unterschiedliche Koordinaten für Ziel und IFF bestimmt werden. In den Fig. 12 und 13 sind beispielhaft Meßwerte eines Ziels mit aktivierter IFF-Kennung "Freund" dargestellt. Typischerweise liegen die Zieldaten auf anderen Strahlen als die IFF-Daten und die Entfernung der Zieldaten und der IFF-Daten ist unterschiedlich. Weiterhin gibt es bei den IFF-Daten mehr Strahlen ohne Echo als bei den Zieldaten. Dies ist in den Fig. 12 und 13 im Bereich der Strahlen 358 bis 365 zu erkennen. Trotzdem stellen beide Meßergebnisse das gleiche Ziel dar. Zur Auswertung der Daten wird zuerst für beide Ergebnisse jeweils eine Schwerpunktsbildung durchgeführt. Wenn beide Schwerpunkte nun innerhalb eines definierten Toleranzbereiches liegen, wird das Ziel als IFF-Freund gekennzeichnet. Das IFF-Signal liegt mit geringem Versatz zeitgleich zum Zielechosignal und hat die gleiche zeitliche Charakteristik, wird aber nicht mit jedem Radarstrahl, sondern typischerweise nur mit jedem 16. Strahl übertragen.

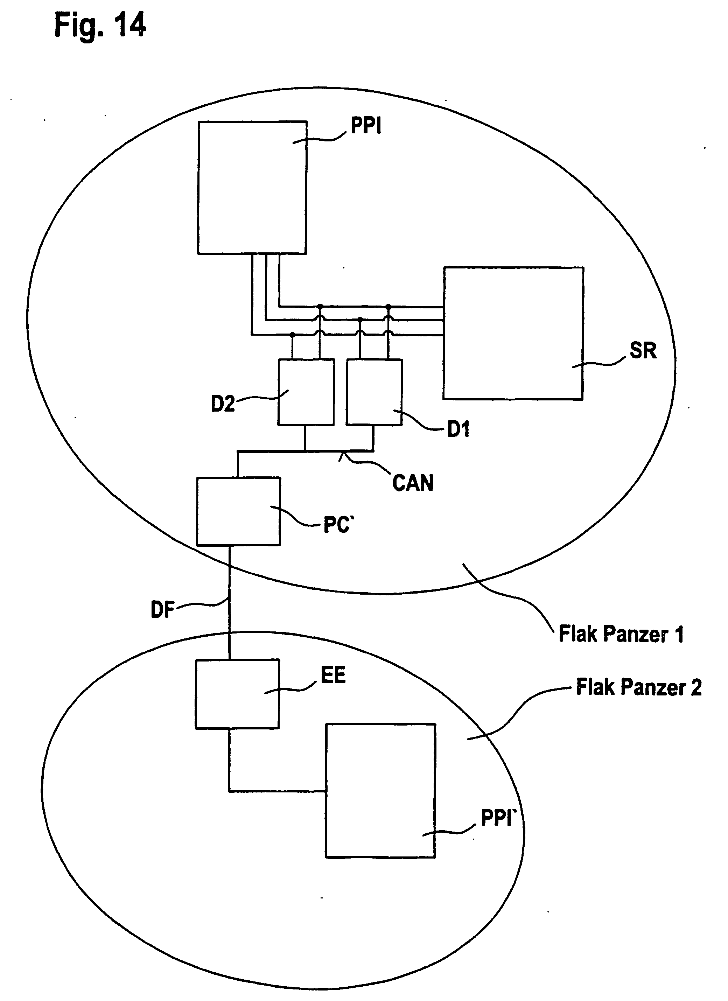

Fig. 14 stellt eine Erweiterung der in Fig. 1B dargestellten Vorrichtung dar, aus der zu entnehmen ist, wie beispielsweise die in einem Flak-Panzer 1 erfaßten und zur Luftlage verarbeiteten Daten über eine Datenfunkverbindung DF vom Flak-Panzer 1 zu einer Empfangseinrichtung EE im Flak-Panzer 2 übertragen werden und dort auf dem PPI-Sichtgerät PPI' als Fremdluftlage dargestellt werden.

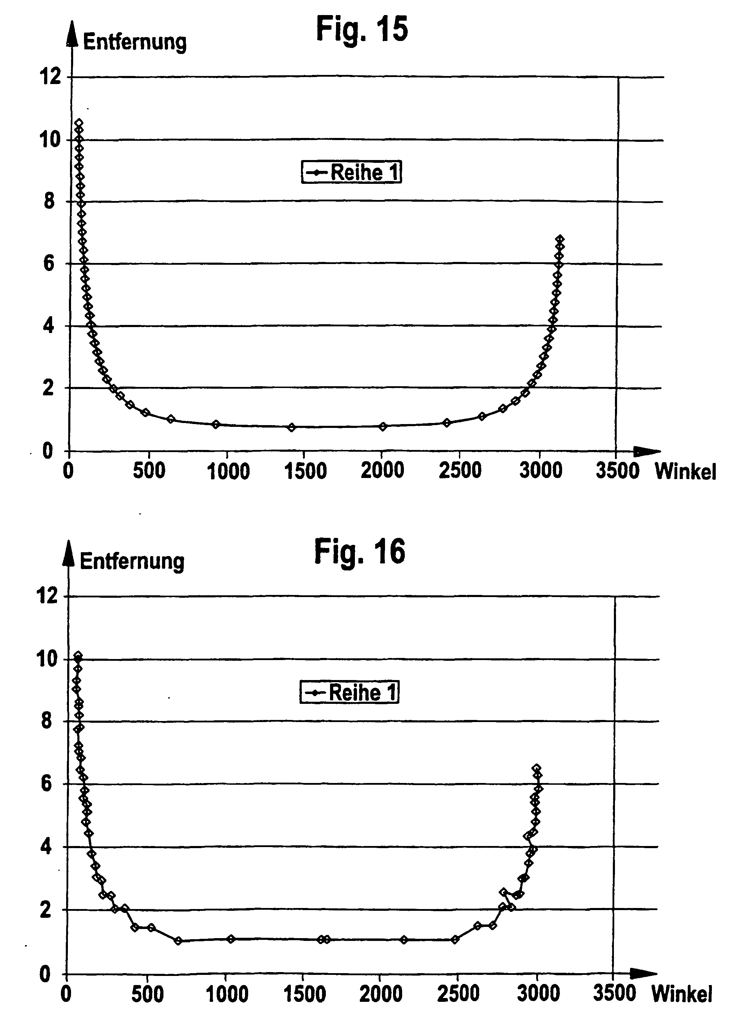

Die Fig. 15 und 16 zeigen an einem Beispiel ein Ergebnis des dargestellten Verfahrens. Es wurden in verschiedenen Meßreihen Zielflüge simuliert und die ermittelten Flugdaten protokolliert. Fig. 15 zeigt in einem Winkel/Entfernungs-Diagramm eine tatsächliche Flugbahn eines vom Suchradar zu erfassenden Flugobjekts. Fig. 16 zeigt in der gleichen Darstellung die aufgrund des oben erläuterten Verfahrens erfaßte und berechnete Flugbahn. Es hat sich dabei gezeigt, daß die Erfassung der Winkelwerte erwartungsgemäß sehr genau ist, während die Genauigkeit der Entfernungsmessung nicht ganz so groß ist, da die Auflösung des Suchradar im Entfernungsbereich begrenzt ist.

## Patentansprüche

1. Verfahren zur Erfassung einer Luftlage in einem Kampffahrzeug, das mit einer Suchradareinrichtung ausgerüstet ist, die einen Sender/Empfänger mit rotierender Sende/Empfangsantenne, eine Signalauswerteeinrichtung sowie ein Sichtgerät umfaßt, wobei pro Umdrehung der Sende/Empfangsantenne Zielechosignale erzeugt werden, die zur optischen Darstellung der Ziele mittels einer Braunschen Röhre dienen, **gekennzeichnet durch** folgende Verfahrensschritte:
a) die Impulse der Zielechosignale werden abgegriffen und zu Rechteckimpulsen verarbeitet, wobei der zeitliche Abstand jedes Zielimpulses von einem Taktimpuls die Zielentfernung und die zeitliche Länge des Zielimpulses die Ziellänge charakterisiert;
b) die Abstände der Zielimpulse vom Taktimpuls sowie die Länge der Zielimpulse werden vermessen, digitalisiert und die digitalisierten Meßwerte werden auf ein vorgegebene Entfernungsbereiche enthaltendes Raster abgebildet;
c) die den Entfernungsbereichen zugeordneten gerasterten Meßwerte jedes Zielechosignals werden mit den Meßwerten der entsprechenden Entfernungsbereiche von mindestens einem der jeweils vorhergehenden Zielechosignale verglichen und die Daten werden nur weiter übertragen, wenn sich die Meßwerte geändert haben;
d) die so reduzierten Daten sowie die Anzahl der identischen Zielechosignale werden zur Berechnung und Anzeige der Zahlenwerte der Zielkoordinaten verwendet;
e) die Zahlenwerte der Zielkoordinaten werden als Fremdluftlage an andere Waffensysteme übertragen und/oder im eigenen Waffensystem als Luftlage verwendet.

2. Verfahren nach Anspruch 1, **dadurch gekennzeichnet, daß** die Vermessung der Abstände der Zielimpulse vom Taktimpuls und der Länge der Zielimpulse mittels Zählermodulen erfolgt.

3. Verfahren nach Anspruch 1 oder 2, **dadurch gekennzeichnet, daß** aus den gerasterten Meßwerten ein Datentelegramm erzeugt wird, wobei jeder Entfernungsbereich im Datentelegramm durch ein Bit dargestellt wird.

4. Verfahren nach Anspruch 3, **dadurch gekennzeichnet, daß** die Datentelegramme über einen CAN-Bus auf einen Rechner übertragen werden.

5. Verfahren nach Anspruch 3 oder 4, **dadurch gekennzeichnet, daß** zusätzliche Datentelegramme zur Synchronisation in die Übertragung eingefügt werden, wenn sich die Meßwerte über einen vorgegebenen längeren Zeitraum nicht geändert haben.

6. Verfahren nach einem der Ansprüche 1 bis 5, **dadurch gekennzeichnet, daß** die Zielimpulse der Zielechosignale vor der Verarbeitung zur Bereinigung gestörter Signale einem Filterverfahren unterworfen werden.

7. Verfahren nach Anspruch 6 **gekennzeichnet durch** ein Filterverfahren, bei dem mit jedem "High"-Wert des Zielechosignals ein retriggerbarer Zähler gesetzt wird, der vom gesetzten Wert bis 0 zählt und derart eingestellt ist, daß der Zählvorgang eine fest vorgegebene Zeitdauer besitzt, die nach der Vermessung der Zielimpulse wieder vom gemessenen Wert abgezogen wird zur exakten Ermittlung der Länge des Ziels.

8. Verfahren nach einem der Ansprüche 1 bis 7 **gekennzeichnet durch** eine Unterdrückung von Störungen im Winkelbereich, indem beim Vergleich der Meßwerte eines Zielechosignals mit den Meßwerten des jeweils vorhergehenden Zielechosignals jeweils die Meßwerte einer vorgegebenen Anzahl aufeinanderfolgender vorhergehender Zielechosignale **durch** logisch "ODER" miteinander verknüpft werden und eine hierdurch gegebenenfalls zu breite Zieldarstellung nach der Übertragung vor der Auswertung korrigiert wird.

9. Verfahren nach einem der Ansprüche 1 bis 8, **dadurch gekennzeichnet, daß** aus den übertragenen Daten, nämlich den Nummern der Zielechosignale und den den Entfernungsbereichen zugeordneten Meßwerten zusammenhängende Entfernungsbereiche bestimmt und deren geometrischer Schwerpunkt berechnet und die Lage dieses Schwerpunktes als Zielkoordinaten mit Zielwinkel und Zielentfernung angezeigt werden.

10. Verfahren nach einem der Ansprüche 1 bis 9, **dadurch gekennzeichnet, daß** die Zielkoordinaten über eine serielle Verbindungsstrecke an ein anderes internes System übertragen werden.

11. Verfahren nach einem der Ansprüche 1 bis 9, **dadurch gekennzeichnet, daß** die Zielkoordinaten über eine Funkstrecke auf einen außerhalb des Kampffahrzeugs angeordneten Rechner übertragen werden.

12. Verfahren nach Anspruch 10 oder 11, **dadurch gekennzeichnet, daß** die übertragenen Zielkoordinaten auf einem Bildschirm durch Blöcke dargestellt werden, wobei der Winkelbezug der einzelnen Zielechosignale anhand eines Prüfziels erfolgt, so daß sich der Winkel der Blöcke durch die Nummern des Zielechosignals und den Winkelbezug ergibt und die Lage der Anfangs- und Endkoordinaten der Blöcke aufgrund der übertragenen Meßwerte der Entfernungskoordinaten berechnet wird.

13. Verfahren nach einem der Ansprüche 1 bis 12, **dadurch gekennzeichnet, daß** parallel zur Erfassung der Zieldaten in einer unabhängigen Anwendung des gleichen Verfahrens die Signale der Identifizierung-Freund-Feind (IFF) erfaßt und verarbeitet werden.

14. Verfahren nach den Ansprüchen 9 und 13, **dadurch gekennzeichnet, daß** für die Meßergebnisse der Zielerfassung und die Meßergebnisse der IFF-Erfassung jeweils eine unabhängige Schwerpunktsbildung gemäß Anspruch 9 durchgeführt wird und wenn beide Schwerpunkte innerhalb eines vorgegebenen Toleranzbereiches liegen, das Ziel entsprechend dem Ergebnis der IFF-Erfassung **gekennzeichnet** wird.

15. Vorrichtung zur Durchführung des Verfahrens nach einem der Ansprüche 1 bis 14 mit einer Suchradareinrichtung (SR) die einen Sender/Empfänger (SR2-SR3) mit rotierender Sende-Empfangsantenne (SR1) eine Signalauswerteeinrichtung sowie ein Sichtgerät (PPI) umfaßt, **gekennzeichnet durch** mindestens eine an die Übertragungsstrecke zwischen Signalauswerteeinrichtung und Sichtgerät angeschlossene Datenerfassungseinrichtung (D1) zur Erfassung der Taktimpulse und der Zielimpulse des Zielechosignals und gegebenenfalls des IFF-Signals, die eine CPU und eine TPU mit Zählermodulen (3.1 bis 3.4) enthält und an die über einen CAN-Bus (CAN) mindestens ein Rechner angeschlossen ist.

16. Vorrichtung nach Anspruch 15, **dadurch gekennzeichnet, daß** die Zielechosignale der Datenerfassungseinrichtung (D1) über ein Filter (6) zur Bereinigung gestörter Signale zugeführt werden.

17. Vorrichtung nach Anspruch 15 oder 16, **dadurch gekennzeichnet, daß** die zum gleichen Zielechosignal gehörenden Zielimpulse über ein Verteilermodul (7) unterschiedlichen Zählermodulen (3.1 bis 3.4) zugeführt werden.

## Claims

1. A process for acquisition of an air situation in a combat vehicle that is equipped with a search-radar device which comprises a transmitter-receiver with rotating transmit-receive antenna, a signal-evaluating device and also a display terminal, wherein target-echo signals are generated for each revolution of the transmit-receive antenna, said signals serving for optical representation of the targets by means of a cathode-ray tube, **characterised by** the following process steps:
a) the pulses of the target-echo signals are picked up and processed into rectangular pulses wherein the temporal spacing of each target pulse from a clock pulse characterises the target distance, and the temporal length of the target pulse characterises the target length;
b) the spacings of the target pulses from the clock pulse and also the length of the target pulses are measured and digitised, and the digitised measured values are imaged onto a grid containing predetermined distance ranges;
c) the scanned measured values of each target-echo signal which are assigned to the distance ranges are compared with the measured values of the corresponding distance ranges of at least one of the respectively preceding target-echo signals, and the data are only transmitted onward if the measured values have changed;
d) the data that have been reduced in this way and also the number of identical target-echo signals are used for the computation and display of the numerical values of the target coordinates;
e) the numerical values of the target coordinates are transmitted by way of alien air situation to other weapon systems and/or are used by way of air situation in the specific weapon system.

2. Process according to Claim 1, **characterised in that** the measurement of the spacings of the target pulses from the clock pulse and the measurement of the length of the target pulses are undertaken by means of counter modules.

3. Process according to Claim 1 or 2, **characterised in that** a data telegram is generated from the scanned measured values, each distance range in the data telegram being represented by one bit.

4. Process according to Claim 3, **characterised in that** the data telegrams are transmitted to a computer via a CAN bus.

5. Process according to Claim 3 or 4, **characterised in that** additional data telegrams are inserted into the transmission for the purpose of synchronisation if the measured values have not changed over a predetermined relatively long period.

6. Process according to one of Claims 1 to 5, **characterised in that** prior to processing the target pulses of the target-echo signals are subjected to a filtering process for the purpose of cleaning up noisy signals.

7. Process according to Claim 6, **characterised by** a filtering process wherein with each "high" value of the target-echo signal a retriggerable counter is set which counts from the set value to 0 and is adjusted in such a way that the counting operation has a permanently predetermined duration which after the measurement of the target pulses is deducted from the measured value for the purpose of exact ascertainment of the target length.

8. Process according to one of Claims 1 to 7, **characterised by** a suppression of perturbations in the angular range, by the measured values of a predetermined number of consecutive preceding target-echo signals being linked with one another in each instance by logical "OR" in the course of the comparison of the measured values of a target-echo signal with the measured values of the respectively preceding target-echo signal and by a target representation that by virtue of this is too wide in the given case being corrected after the transmission prior to the evaluation.

9. Process according to one of Claims 1 to 8, **characterised in that** coherent distance ranges are determined from the transmitted data, namely from the numbers of the target-echo signals and from the measured values assigned to the distance ranges, and the geometrical centre of gravity thereof is computed and the position of this centre of gravity is displayed in the form of target coordinates with target angle and target distance.

10. Process according to one of Claims 1 to 9, **characterised in that** the target coordinates are transmitted to another internal system via a serial connecting link.

11. Process according to one of Claims 1 to 9, **characterised in that** the target coordinates are transmitted to a computer arranged outside the combat vehicle via a radio link.

12. Process according to Claim 10 or 11, **characterised in that** the transmitted target coordinates are represented on a display screen by means of blocks, the angular reference of the individual target-echo signals being given on the basis of a test target, so that the angle of the blocks results by virtue of the numbers of the target-echo signal and the angular reference, and the positions of the initial and final coordinates of the blocks are computed on the basis of the transmitted measured values of the distance coordinates.

13. Process according to one of Claims 1 to 12, **characterised in that** the signals of the Identification Friend or Foe (IFF) system are acquired and processed in parallel with the acquisition of the target data in an independent application of the same process.

14. Process according to Claims 9 and 13, **characterised in that** an independent derivation of the centre of gravity according to Claim 9 is carried out both in respect of the measured results of the target acquisition and in respect of the measured results of the IFF acquisition and if both centres of gravity lie within a predetermined range of tolerance the target is **characterised in** accordance with the result of the IFF acquisition.

15. An apparatus for implementing the process according to one of Claims 1 to 14, with a search-radar device (SR) which comprises a transmitter-receiver (SR2-SR3) with rotating transmit-receive antenna (SR1), a signal-evaluating device and also a display terminal (PPI), **characterised by** at least one data-acquisition device (D1) connected to a transmission link between the signal-evaluating device and the display terminal for the purpose of acquisition of the clock pulses and of the target pulses of the target-echo signal and, where appropriate, of the IFF signal, which contains a CPU and a TPU with counter modules (3.1 to 3.4) and to which at least one computer is connected via a CAN bus (CAN).

16. Apparatus according to Claim 15, **characterised in that** target-echo signals of the data-acquisition device (D1) are supplied via a filter (6) for the purpose of cleaning up noisy signals.

17. Apparatus according to Claim 15 or 16, **characterised in that** the target pulses pertaining to the same target-echo signal are supplied to different counter modules (3.1 to 3.4) via a distributor module (7).

## Revendications

1. Procédé pour détecter une indication de position dans un véhicule de combat, qui est équipé d'un dispositif radar de recherche, qui comprend un émetteur/récepteur possédant une antenne d'émission/réception tournante, un dispositif d'évaluation de signaux ainsi qu'un appareil de visualisation, selon lequel lors de chaque rotation de l'antenne d'émission/réception, des signaux d'échos de cibles sont produits, ces signaux étant utilisés pour la représentation optique des cibles à l'aide d'un tube de Braun, **caractérisé par** les étapes opératoires suivantes :
a) les impulsions des signaux d'échos de cibles sont prélevées et traitées pour former des impulsions rectangulaires, l'intervalle de temps entre chaque impulsion de cible et une impulsion de cadence caractérisant la distance de la cible, et la longueur dans le temps de l'impulsion de cible caractérisant la longueur de la cible;
b) les distances des impulsions de cibles par rapport à l'impulsion de cadence ainsi que la longueur des impulsions de cibles sont mesurées, numérisées et les valeurs de mesure numérisées sont représentées sur une trame contenant des gammes prédéterminées de distances;
c) les valeurs de mesure tramées, associées aux gammes de distances, de chaque signal d'écho de cible sont comparées aux valeurs de mesure des gammes correspondantes de distances d'au moins un signal d'écho de cible respectivement précédent et les données continuent à être transmises uniquement lorsque les valeurs de mesure ont changé;
d) les données ainsi réduites ainsi que le nombre des signaux identiques d'échos de cibles sont utilisés pour le calcul et l'affichage des valeurs chiffrées des coordonnées des cibles;
e) les valeurs chiffrées des coordonnées des cibles sont transmises en tant qu'indication de position étrangère à d'autres systèmes d'armes et/ou sont utilisées dans le propre système d'armes en tant qu'indication de position.

2. Procédé selon la revendication 1, **caractérisé en ce que** la mesure des distances des impulsions de cibles par rapport à l'impulsion de cadence et la longueur des impulsions de cibles s'effectue à l'aide de modules de compteurs.

3. Procédé selon la revendication 1 ou 2, **caractérisé en ce qu'**à partir des valeurs de mesure tramées, on forme un télégramme de données, chaque gamme de distances étant représentée par un bit dans le télégramme de données.

4. Procédé selon la revendication 3, **caractérisé en ce que** les télégrammes de données sont transmis par l'intermédiaire d'un bus CAN à un calculateur.

5. Procédé selon la revendication 3 ou 4, **caractérisé en ce que** des télégrammes supplémentaires de données sont insérés dans la transmission pour la synchronisation lorsque les valeurs de mesure n'ont pas changé pendant un intervalle de temps prédéterminé assez long.

6. Procédé selon l'une des revendications 1 à 5, **caractérisé en ce que** les impulsions des signaux d'échos de cible sont soumises au procédé de filtrage avant le traitement visant à purifier des signaux parasités.

7. Procédé selon la revendication 6, **caractérisé par** un procédé de filtrage, selon lequel chaque valeur "niveau haut" du signal d'écho de cible provoque la remise à l'état initial d'un compteur redéclenchable, qui compte depuis la valeur de remise à l'état initial jusqu'à 0 et est réglé de telle sorte que le processus de comptage possède une durée prédéterminée de façon fixe, qui, après la mesure des impulsions de cible, est à nouveau déduite de la valeur mesurée, pour la détermination précise de la longueur de la cible.

8. Procédé selon l'une des revendications 1 à 7, **caractérisé par** une suppression de parasites dans la plage angulaire, dans laquelle, lors de la comparaison des valeurs de mesure d'un signal d'écho de cible aux valeurs de mesure du signal d'écho de cible respectivement précédent, respectivement les valeurs de mesure d'un nombre prédéterminé de signaux d'échos de cible précédents successifs sont combinées entre elles au moyen d'une combinaison logique "OU" et qu'une représentation de cible, qui de ce fait est éventuellement trop large, est corrigée après la transmission et avant l'évaluation.

9. Procédé selon l'une des revendications 1 à 8, **caractérisé en ce que** des gammes de distances sont déterminées à partir les données transmises, à savoir les nombres des signaux d'échos de cible et les valeurs de mesure associées aux gammes de distances, et que leur barycentre géométrique est calculé et que la position de ce barycentre est affichée en tant que coordonnées de la cible avec l'angle de la cible et l'éloignement de la cible.

10. Procédé selon l'une des revendications 1 à 9, **caractérisé en ce que** les coordonnées de la cible sont transmises à un autre système interne par l'intermédiaire d'une section de liaison en série.

11. Procédé selon l'une des revendications 1 à 9, **caractérisé en ce que** les coordonnées de la cible sont transmises par l'intermédiaire d'une section hertzienne à un calculateur disposé à l'extérieur du véhicule de combat.

12. Procédé selon la revendication 10 ou 11, **caractérisé en ce que** les coordonnées transmises de la cible sont représentées sur un écran par des blocs, la référence angulaire des différents signaux d'échos de cible s'effectuant au moyen d'une cible de contrôle de sorte que l'angle des blocs est fourni par les nombres du signal d'écho de cible et la référence angulaire, et la position des coordonnées de départ et de fin des blocs sont calculés sur la base des valeurs de mesure transmises des coordonnées d'éloignement.

13. Procédé selon l'une des revendications 1 à 12, **caractérisé en ce que** les signaux d'identification ami-ennemi (IFF) sont détectés en parallèle avec la détection des données de cible dans une application indépendante du même procédé et sont traités.

14. Procédé selon les revendications 9 et 13, **caractérisé en ce que** pour les résultats de mesure de la détection de la cible et pour les résultats de mesure de la détection IFF, on exécute respectivement une formation indépendante du barycentre conformément à la revendication 9 et, lorsque les deux barycentres sont situés à l'intérieur d'une plage prédéterminée de tolérance, la cible est **caractérisée** conformément aux résultats de la détection IFF.

15. Dispositif pour la mise en oeuvre du procédé selon l'une des revendications 1 à 14, comportant un dispositif de radar de recherche (SR), qui comprend un émetteur/récepteur (SR2,SR3) possédant une antenne d'émission-réception tournante (SR1), un dispositif d'évaluation du signal ainsi qu'un appareil de visualisation (PPI), **caractérisé par** au moins un dispositif (D1) de détection de données raccordé à la section de transmission entre le dispositif d'évaluation de signaux et l'appareil de visualisation, pour la détection des impulsions de cadence et des impulsions de cible du signal d'écho de cible et éventuellement du signal IFF, et qui contient une unité centrale CPU et une unité TPU comportant des modules de compteurs (3.1 à 3.4) et auquel au moins un calculateur est raccordé par l'intermédiaire d'un bus CAN (CAN).

16. Dispositif selon la revendication 5, **caractérisé en ce que** les signaux d'échos sont envoyés au dispositif de détection de données (D1) au moyen d'un filtre (6) pour la purification de signaux parasités.

17. Dispositif selon la revendication 15 ou 16, **caractérisé en ce que** les impulsions de cible, qui appartiennent au même signal d'écho de cible, sont envoyées à différents modules de compteurs (3.1 à 3.4) par l'intermédiaire d'un module de distribution (7).
